(19) **Europäisches Patentamt European Patent Office Office européen des brevets**

(11) **EP 3 498 357 A1**

(12) **DEMANDE DE BREVET EUROPEEN**

(43) Date de publication:
**19.06.2019 Bulletin 2019/25**

(51) Int Cl.:
**B01D 3/16** (2006.01)   **B01D 3/20** (2006.01)
**B01D 3/32** (2006.01)

(21) Numéro de dépôt: **18209427.6**

(22) Date de dépôt: **30.11.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **15.12.2017 FR 1762231**

(71) Demandeur: **IFP Energies nouvelles 92852 Rueil-Malmaison Cedex (FR)**

(72) Inventeurs:
• **HAROUN, Yacine 69002 LYON (FR)**
• **BRAHEM, Rim 69007 LYON (FR)**
• **ROESLER, John 38200 VIENNE (FR)**

(74) Mandataire: **IFP Energies nouvelles Département Propriété Industrielle Rond Point de l'échangeur de Solaize BP3 69360 Solaize (FR)**

(54) **PLATEAU POUR COLONNE D'ECHANGE COMPRENANT DES CHEMINEES DE GAZ SURMONTEES DE CHAPEAUX AU PROFIL AERODYNAMIQUE**

(57) - L'invention porte sur un plateau (100) pour colonne de contact gaz/liquide comportant une pluralité de cheminées (108) en saillies sur une portion (101) de la face supérieure du plateau pour le passage exclusif du gaz à travers le plateau, sensiblement parallélépipédiques et parallèles entre elles. Au moins une des cheminées (108) est surmontée par un chapeau surélevé (108') au profil aérodynamique, empêchant le passage du liquide au travers de la cheminée. Le chapeau comporte un corps inférieur (180) sensiblement semi-cylindrique allongé selon l'axe longitudinal Y et ouvert vers le haut, prolongé latéralement par deux ailettes planes (181, 182) inclinées vers l'axe de révolution (R) du corps inférieur d'un angle θ compris entre 0 et 30° par rapport à un axe Z traversant les cheminées selon leur hauteur.
- L'invention concerne également une colonne d'échange comprenant un tel plateau distributeur et l'utilisation d'une telle colonne.

FIG. 5

## Description

### Domaine de l'invention

La présente invention concerne le domaine des plateaux distributeurs de gaz pour colonnes de contact gaz/liquide, et plus particulièrement les colonnes pour les unités de traitement de gaz, de captage du dioxyde de carbone ($CO_2$), de déshydratation d'un gaz, ou encore de distillation.

### Contexte général

Les unités de traitement de gaz et/ou de captage du $CO_2$ par lavage aux amines et/ou de distillation et/ou de déshydratation d'un gaz comprennent des colonnes d'échange de matière et/ou de chaleur entre un gaz et un liquide. Il peut s'agir par exemple de colonnes d'absorption et de régénération de fluides, liquide ou gazeux. Ces colonnes fonctionnent en écoulement gaz/liquide à contre-courant ou à co-courant.

Dans la présente description, on désigne indifféremment ces colonnes d'échange de matière et/ou de chaleur entre un gaz et un liquide en tant que colonnes d'échange gaz/liquide ou colonnes de contact gaz/liquide.

Les colonnes de contact gaz/liquide utilisées dans ces unités de traitement de gaz et/ou de captage de $CO_2$ et/ou de distillation et/ou de déshydratation fonctionnent généralement sur le principe d'un échange de matière et/ou de chaleur entre le gaz et le fluide qui circulent dans les colonnes.

Lorsqu'il s'agit de retirer des contaminants présents dans le gaz, comme le $CO_2$, l'eau, l'hydrogène sulfuré ($H_2S$), l'oxysulfure de carbone (COS), par des procédés de lavage par un liquide, on utilise généralement des colonnes de contact gaz/liquides verticales, qui lavent un courant de gaz ascendant en circulation à contre-courant d'un courant liquide descendant. Ainsi, les contaminants du gaz sont retenus par le liquide lors de la remontée du gaz dans la colonne avec des vitesses d'absorption variables. Dans le cadre de l'absorption de contaminants dans un gaz, on entend également par colonne de contact verticale les tours de régénération, dans lesquelles les solvants (liquides) chargés en contaminants sont épurés par contact avec un gaz, qui favorise l'extraction des contaminants présents dans la solution chargée en contaminants. Les unités sont généralement composées de deux colonnes de contact gaz/liquide, l'une consacré à l'absorption des contaminants, tels que des composés acides sous forme gazeuse, par le solvant s'écoulant le long de la colonne d'absorption aussi appelée absorbeur, l'autre étant consacrée à la régénération (« régénérateur ») du solvant contenant les contaminants issu de la première colonne de contact gaz/liquide, aussi appelé solvant riche, par exemple par apport de chaleur sous forme de mise en ébullition dudit solvant, de manière à épurer complètement le solvant qui est alors réutilisé dans l'absorbeur. Ce solvant régénéré est aussi appelé solvant pauvre.

Il existe une grande variété de types de colonnes de contact gaz/liquide.

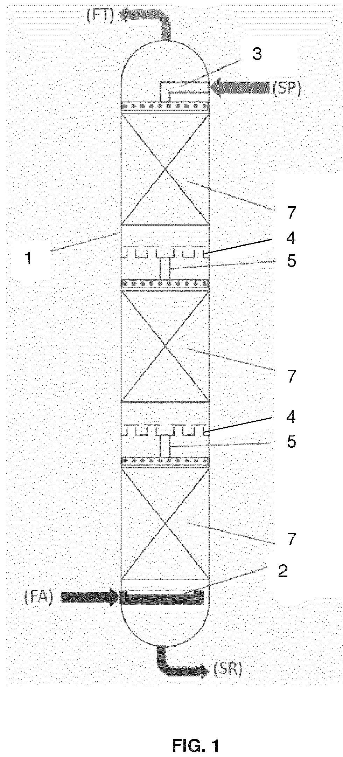

La figure 1 représente une réalisation possible d'une colonne d'échange de matière et/ou de chaleur entre un gaz et un liquide, par exemple dans le cadre de l'absorption de composés acides contenus dans le gaz par le liquide qui est une solution aqueuse d'amine(s). Il s'agit d'une colonne de contact gaz/liquide verticale comportant des internes de contact de type garnissage vrac et/ou garnissage structuré, et mettant en oeuvre plusieurs lits de garnissages avec redistribution intermédiaire du flux de liquide.

Les garnissages dits vrac et les garnissages dits structurés forment les deux grandes familles de garnissages disponibles actuellement. Un garnissage de type vrac est constitué par une multiplicité d'éléments solides singuliers, possiblement identiques et généralement de taille modérée (de l'ordre du centimètre), déposés en vrac au sein des contacteurs, alors qu'un garnissage de type structuré est généralement formé par des tôles d'aciers mises en forme et arrangées de manière particulière.

Tel que représentée à la figure 1, la colonne de contact gaz/liquide 1 contient du garnissage, vrac et/ou structuré, réparti en plusieurs lits de garnissage 7. La colonne de contact 1 reçoit le fluide gazeux FA à traiter, contenant des composés acides à éliminer, en fond de colonne, et le solvant pauvre SP (solution liquide d'amine(s)) en tête de colonne. Le fluide gazeux à traiter FA est généralement introduit en fond de colonne à l'aide d'un distributeur de gaz 2 permettant d'uniformiser au mieux le profil de vitesse du gaz ascendant sur l'ensemble de la section inférieure du lit de garnissage 7 afin d'améliorer les performances de fonctionnement de la colonne. La colonne de contact 1 délivre le fluide gazeux traité FT, épuré d'une partie des composés acides, en tête de colonne, et le solvant riche SR, chargé d'une partie des composés acides contenus dans le fluide gazeux à traiter, en fond de colonne. Le transfert des composés acides du fluide gazeux vers le solvant liquide est opéré via la mise en contact intime de la phase liquide descendante et de la phase vapeur ascendante au sein de la colonne, au niveau des lits de garnissage 7. Les lits de garnissage 7 sont composés d'éléments solides qui présentent une surface de contact élevée, sur laquelle le liquide est réparti de manière uniforme et s'écoule vers le bas, ce qui favorise le contact avec la phase vapeur ascendante, et permet ainsi de transférer efficacement de la matière et/ou de la chaleur entre les deux fluides.

Pour tous les types de garnissage, afin de disposer de toute la surface développée par l'interne de transfert, il convient que chacun des flux évoluant à contre-courant s'écoule de la manière la plus uniforme possible sur l'ensemble de la section de la colonne, et des internes de contact de la colonne. A cet effet, le solvant pauvre SP, en tête de colonne, est injecté de manière uniforme sur la section du lit de garnissage de tête 7, à l'aide d'un distributeur liquide 3, et le gaz à traiter FT est introduit en fond de contacteur à l'aide du distributeur de gaz 2. La colonne 1 comprend également une pluralité de systèmes de collecte et de redistribution liquide (4,5) entre les lits de garnissage 7. La colonne 1 représentée comporte ainsi deux tels systèmes de collecte et de redistribution liquide (4,5), chacun étant placé entre deux lits de garnissage 7, permettant d'une part de collecter le liquide descendant provenant du lit de garnissage supérieur et de distribuer ledit liquide sur le lit de garnissage inférieur, et d'autre part de distribuer uniformément le gaz provenant du lit de garnissage inférieur liquide sur le lit de garnissage supérieur. Cette configuration est particulièrement bien adaptée lorsqu'une forte hauteur de contact gaz/liquide est requise. Ces systèmes de collecte et de redistribution liquide intermédiaires, ici installés entre deux lits de garnissage 7, peuvent être de différents types, comme par exemple des systèmes comportant un plateau collecteur de liquide 4 comprenant des cheminées pour le passage du gaz, associé à un distributeur 5 comportant une conduite verticale débouchant sur une pluralité d'arroseurs (tubes horizontaux munis d'orifices ou de buses) pour la distribution du liquide collecté sur le plateau 4.

En général, le distributeur de gaz 2 disposé en fond de la colonne collecte également le liquide SR qui peut ensuite être extrait en fond de colonne 1. Le liquide SR est généralement collecté dans une zone de collecte de liquide prévue sur le distributeur de gaz 2, ladite zone étant classiquement reliée au fond de la colonne par des jambes débouchant dans une zone de garde liquide d'où est soutiré le liquide hors de la colonne1.

La présente invention porte en particulier sur un plateau de distribution de gaz ou de gaz et de liquide, de type à cheminées pour le passage du gaz, également appelés plateaux à cheminées (« chimney trays » en anglais). Il peut s'agir d'un dispositif de distribution de gaz et de collecte de liquide disposé en fond de colonne, comme le dispositif 2 de la figure 1, ou encore d'un dispositif de distribution de gaz, de collecte et de redistribution de liquide disposé entre des contacteurs gaz/liquide de la colonne, typiquement entre des lits de garnissage, comme les dispositifs (4,5) de la figure 1.

Comme évoqué plus haut dans la description de la colonne représentée à la figure 1, une bonne distribution des phases gaz et liquide est importante pour assurer une bonne opérabilité de la colonne ainsi qu'un transfert de matière et/ou de chaleur efficace garantissant le respect des spécifications requises pour les produits (e.g. fluide gazeux traité FT épuré d'une partie des composés acides tels que le $CO_2$, l'$H_2S$, le COS).

En particulier, la qualité de la distribution du gaz est d'autant plus importante que le diamètre de la colonne est grand et que le garnissage utilisé pour mettre en contact le gaz et le liquide est capacitif. Par garnissage capacitif, on entend un garnissage ayant une grande capacité. On appelle capacité d'un garnissage, la quantité de gaz maximum pouvant circuler sans engorger la colonne par rapport à un débit liquide donné, c'est-à-dire sans créer d'accumulation de liquide dans une partie du garnissage. La capacité d'un garnissage dépend de nombreux facteurs (angle des canaux, formes des éléments, etc.), elle est généralement inversement proportionnelle à sa surface spécifique (également appelée aire géométrique) qui est la surface de contact par unité de volume (exprimée en $m^2/m^3$). En effet, l'utilisation d'un garnissage capacitif permet de retarder le phénomène d'engorgement de la colonne, et permet également de réduire la perte de charge linéique dans le garnissage. Par perte de charge linéique, on entend la perte de charge totale du garnissage ramenée à sa hauteur.

Ainsi, plus particulièrement pour les colonnes d'échange de matière et/ou de chaleur entre un gaz et un liquide de large diamètre, typiquement ayant un diamètre supérieur ou égal à 1 mètre, le système de distribution du gaz en fond de colonne ou encore le système de redistribution du gaz et du liquide situé entre deux lits de garnissage de la colonne s'avère important, car la bonne distribution du gaz permet généralement un gain en capacité et en performance qui se traduisent par une réduction de taille de la colonne et donc de coût.

Parmi les systèmes de distribution du gaz en fond de colonne existants, ou les systèmes de redistribution de gaz et de liquide intermédiaires (entre des lits de garnissages), les plateaux à cheminée (« chimney trays » en anglais) sont largement employés. En particuliers, les plateaux à cheminées sont couramment employés dans le cas d'applications nécessitant de forts débits de gaz.

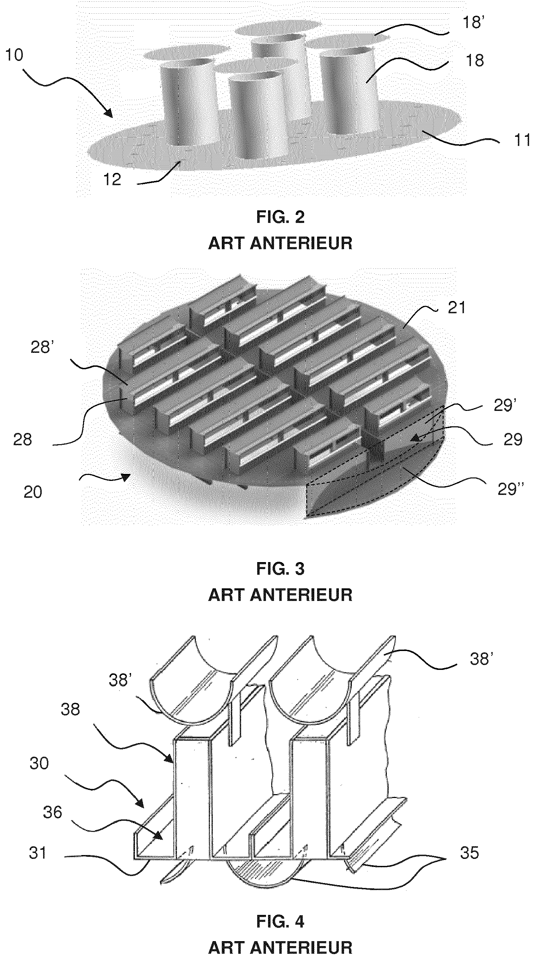

La figure 2 illustre un tel plateau à cheminées classiquement utilisé en tant que système de redistribution du gaz et du liquide installé entre deux lits de garnissage successifs, permettant de collecter le liquide issu du lit de garnissage supérieur et le redistribuer vers le lit de garnissage inférieur, tout en assurant le passage du gaz depuis le lit de garnissage inférieur vers le lit de garnissage supérieur. Le plateau 10 est muni de cheminées 18 pour le passage du gaz, les cheminées étant couvertes par des « chapeaux » 18' pour éviter le passage de liquide au sein des cheminées gaz (en situation d'écoulement à contre-courant), et est muni d'orifices 12 pour le passage de liquide. Une garde liquide s'établit sur toute la section du plateau distributeur de liquide et de gaz 10, qui alimente le lit de contact (garnissage) inférieur dans la colonne via les orifices 12 uniformément répartis sur le fond du plateau, alors que le gaz est acheminé via les cheminées 18. Un tel type de plateau est par exemple décrit dans la demande de brevet EP 2 653 204.

La figure 3 illustre un plateau à cheminées utilisé en tant que plateau distributeur de gaz en fond de colonne. Un exemple d'un tel distributeur est par exemple commercialisé par Sulzer Chemtech et proposé dans le document commercial « Internais for packed columns » (Sulzer Chemtech, Commercial Brochure 22.51.06.40 - V.13, page 16).

Dans ce type de distributeur de gaz, un plateau 20 est muni de plusieurs cheminées 28 pour le passage du gaz à travers le plateau 20. Selon un mode de fonctionnement contre-courant de la colonne, chaque cheminée 28 permet le passage du gaz de la partie basse de la colonne vers la partie haute de la colonne. Les cheminées 28 sont en saillies de la face supérieure du plateau 20 orientée vers le haut de la colonne, et sont disposées orthogonalement au plan formé par le plateau 20. Chaque cheminée 28 est formée de plusieurs parois qui délimitent un volume interne ouvert de part et d'autre du plateau 20. Pour chaque cheminée 28, l'ouverture d'échappement du gaz située sur la face supérieure du plateau 20 est surmontée par un chapeau 28' permettant d'éviter que le liquide ne passe dans les cheminées 28 tout en laissant passer le gaz par un espace laissé entre le chapeau et la cheminée. Le plateau 20 comporte également une zone de collecte 29 du liquide pour la récupération du liquide descendant dans la colonne et tombant sur le plateau 20 entre les cheminées 28. Cette zone de collecte 29 est une cavité du plateau 20 située à sa périphérie, délimitée d'un côté par un déversoir 29', qui correspond à une portion verticale du plateau, et d'un autre côté par la paroi de la virole de la colonne à laquelle vient se fixer le plateau 20. Cette zone de collecte 29 est généralement reliée à une zone inférieure de la colonne où se forme une garde liquide et d'où le liquide peut être extrait de la colonne (non représenté).

Le plateau 20 a une forme générale circulaire selon une vue du dessus, et comporte une première portion plane 21 supportant les cheminées 28, ayant une forme de cercle tronqué selon une vue du dessus, une deuxième portion plane 29" sensiblement parallèle à la première portion plane, située à un niveau inférieur à celui de la première portion du plateau, et reliée à la première portion par le déversoir 29', qui est une troisième portion plane orthogonale du plateau. La zone de collecte 29 est donc le volume formé en partie par le déversoir 29 et la deuxième portion plane 29" du plateau, l'autre partie étant la paroi de la virole de la colonne (non représentée).

Sur le plateau 20 représenté, 12 cheminées en forme de parallélépipède rectangulaire, allongées selon un axe parallèle au plan formé par le déversoir 29' sont ainsi disposées de manière alignées deux par deux de part et d'autre d'un conduit central divisant la première portion du plateau en deux parties égales, ledit conduit débouchant dans la zone de collecte 29 délimitée par le déversoir 29' et la deuxième portion plane inférieure 29" du plateau.

Dans d'autres distributeurs de gaz de type plateaux à cheminées selon l'art antérieur, les cheminées de passage du gaz peuvent avoir d'autres formes et une autre disposition que celles des plateaux distributeurs de gaz illustrés aux figures 2 et 3. Il en va de même pour les chapeaux recouvrant les cheminées, qui peuvent avoir d'autres formes, ou pour la zone de collecte du liquide, qui peut être disposée sur toute la périphérie du plateau, ou être partagée en deux zones à la périphérie du plateau et diamétralement opposées.

La figure 4 est une vue partielle d'un autre exemple de plateau à cheminées, décrit dans le brevet US4744929A qui porte sur des dispositifs de support de garnissages comportant des plateaux à cheminées pour des colonnes d'échanges entre un liquide descendant et un gaz ascendant. Le plateau 30 comporte des cheminées 38 de passage du gaz en forme de parallélépipède rectangle disposées parallèlement sur le plateau 30 et définissant entre elles des canaux 36. Les cheminées 38 comportent des formations aérodynamiques 35 et 38' à la base et au sommet des cheminées pour améliorer l'écoulement du gaz. Les formations 38' forment des chapeaux en forme de demi-cylindre surmontant les cheminées et ayant en outre une fonction de collecte du liquide qui se déverse aux extrémités longitudinales des cheminées dans des puisards disposés en périphérie du plateau ou traversant le plateau (non représentés). Les canaux 36 collectent le liquide non récolté par les chapeaux 38', qui se déverse également dans les puisards.

Toutefois, les distributeurs de gaz de type plateaux à cheminées selon l'art antérieur ne sont pas toujours satisfaisants et peuvent générer des vitesses de gaz non parfaitement homogènes, et ceci est d'autant plus accentué lorsque le diamètre de la colonne est grand.

En outre, il est toujours recherché à minimiser la perte de charge engendrée par la présence d'un plateau au sein d'une colonne de contact gaz/liquide. En effet, les pertes de charge représentent des pertes d'énergie, généralement non désirées. Les pertes de charge sont d'autant plus problématiques lorsque le procédé visé est mis en oeuvre à des pressions relativement faibles, comme c'est le cas des procédés de captage de $CO_2$ par exemple sur des fumées de combustion, typiquement mis en oeuvre à des pressions comprises entre 1 et 5 bar.

**Objectifs et résumé de l'invention**

La présente invention vise ainsi à fournir un plateau de type plateau à cheminées gaz amélioré, pour distribuer du gaz ou du gaz et du liquide, pour être par exemple utilisé dans des colonnes de large diamètre (typiquement de diamètre au moins égal à 1 mètre), permettant notamment une meilleure homogénéisation de la vitesse de gaz en aval du plateau (en aval étant défini par rapport à la direction du courant de gaz ascendant dans la colonne), tout en minimisant la perte de charge liée au passage du gaz à travers ledit plateau.

Ainsi, pour atteindre au moins l'un des objectifs susvisés, parmi d'autres, la présente invention propose, selon un premier aspect, un plateau pour colonne d'échange de chaleur et/ou de matière entre un gaz et un liquide comportant :

- une face supérieure et une face inférieure,
- une pluralité de cheminées en saillies sur une portion de la face supérieure du plateau pour le passage exclusif du gaz à travers le plateau, les cheminées comportant à leur sommet une ouverture d'échappement du gaz, étant traversées par un axe Z dans le sens de leur hauteur et allongées selon un axe longitudinal Y orthogonal à l'axe Z, et étant sensiblement parallélépipédiques et parallèles entre elles, et

dans lequel au moins une des cheminées est surmontée par un chapeau au profil aérodynamique pour empêcher le passage du liquide au travers de la cheminée, le chapeau étant surélevé par rapport à l'ouverture d'échappement du gaz de la cheminée, et le chapeau comportant un corps inférieur sensiblement semi-cylindrique allongé selon l'axe longitudinal Y et ouvert du côté opposé à l'ouverture d'échappement de la cheminée, prolongé latéralement par deux ailettes planes inclinées vers l'axe de révolution (R) du corps inférieur d'un angle θ compris entre 0 et 30° par rapport à l'axe Z.

Selon un mode de réalisation, chaque cheminée est surmontée d'un chapeau au profil aérodynamique.

Selon un mode de réalisation, le diamètre du corps inférieur du chapeau est de préférence au moins égal à la largeur de la cheminée.

Selon un mode de réalisation, la longueur du corps inférieur du chapeau est de préférence au moins égale à la longueur de la cheminée.

Selon un mode de réalisation, le corps inférieur comporte une section en arc de cercle de longueur inférieure ou égale à celle d'un demi-cercle, a un axe de symétrie confondu avec l'axe Z, et définit un angle β formé entre le centre O du cercle, l'axe X et la jonction J entre une ailette et le corps inférieur compris entre 0 et 30°.

Selon un mode de réalisation, le corps inférieur est un demi-cylindre.

Selon un mode de réalisation, le corps inférieur comporte une section en arc de cercle de longueur inférieure ou égale à celle d'un demi-cercle et a un axe de symétrie confondu avec l'axe Z, et la largeur (a) de l'ailette est comprise entre 10 mm et une valeur maximale $a_{max}$ égale à $a_{max} = (D*cos(β))/(2*sin(θ))$, avec β l'angle formé entre le centre O du cercle, l'axe X et la jonction J entre l'ailette et le corps inférieur, θ l'inclinaison des ailettes par rapport à l'axe Z, et D le diamètre du corps inférieur.

Selon un mode de réalisation, les ailettes ont sensiblement la forme d'un rectangle.

Selon un mode de réalisation, les cheminées ont sensiblement une forme de parallélépipède rectangle.

Selon un mode de réalisation, au moins une des cheminées, et de préférence la totalité des cheminées, comporte un élément dispersif par rapport au gaz disposé à l'intérieur de la cheminée, l'élément dispersif comprenant de préférence une plaque perforée comportant des orifices circulaires ou des fentes pour le passage du gaz.

Selon un mode de réalisation, le plateau comprend en outre des moyens pour le passage du liquide à travers le plateau et/ou une zone de collecte du liquide.

Selon un mode de réalisation, le plateau permet la distribution du gaz en fond d'une colonne d'échange de chaleur et/ou de matière entre un gaz et un liquide, et la zone de collecte comprend deux déversoirs diamétralement opposés et orthogonaux à la portion de la face supérieure du plateau supportant les cheminées, les cheminées s'étendant parallèlement aux déversoirs.

Selon un mode de réalisation, le plateau permet la distribution du gaz et du liquide dans une colonne d'échange de chaleur et/ou de matière entre un gaz et un liquide, et les moyens pour le passage du liquide à travers le plateau comprennent une pluralité d'orifices et/ou de cheminées pour le passage du liquide.

La présente invention propose, selon un deuxième aspect, une colonne d'échange de chaleur et/ou de matière entre un gaz et un liquide, comportant au moins un contacteur gaz/liquide mettant en contact le gaz et le liquide, et au moins un plateau selon l'invention pour distribuer le gaz, et éventuellement le liquide, sur le contacteur gaz/liquide.

Selon un mode de réalisation, le plateau est disposé au fond de la colonne en amont de tout contacteur gaz/liquide pour distribuer le gaz à la base du contacteur gaz/liquide.

Selon un mode de réalisation, la colonne une pluralité de sections, chacune des sections comprenant un contacteur gaz/liquide, et un plateau selon l'invention est disposé entre une section supérieure et une section inférieure, les sections supérieure et inférieure étant successives dans la colonne, pour distribuer le gaz à la base ducontacteur gaz/liquide de la section supérieure et distribuer le liquide au sommet du contacteur gaz/liquide de la section inférieure.

Selon un troisième aspect, la présente invention propose l'utilisation d'une colonne selon l'invention pour un procédé de traitement de gaz, de captage du $CO_2$, de déshydratation d'un gaz, ou de distillation.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

**Brève description des figures**

La figure 1, déjà décrite, est un schéma illustrant un cas particulier d'une colonne de contact gaz/liquide pour l'absorption de composés acides contenus dans un gaz par une solution aqueuse d'amine, dans le cadre d'un traitement de gaz ou d'une capture de $CO_2$, équipée d'un plateau distributeur selon l'art antérieur ou selon l'invention.

La figure 2, déjà décrite, illustre un plateau à cheminées selon l'état de l'art pour la collecte du liquide et la distribution du liquide et du gaz.

La figure 3, déjà décrite, illustre un plateau distributeur de gaz à cheminée selon l'art antérieur apte à être placé en fond d'une colonne de contact gaz/liquide.

La figure 4, déjà décrite, illustre un autre exemple de plateau à cheminées selon l'art antérieur.

La figure 5 est une vue en perspective illustrant un plateau distributeur de gaz selon un mode de réalisation de l'invention.

La figure 6 est un schéma en coupe d'un chapeau d'une cheminée d'un plateau distributeur selon l'invention.

La figure 7 illustre l'intérieur d'une cheminée d'un plateau selon un mode réalisation de l'invention

Les figures 8 et 9 dont des images des champs de vitesse du gaz issues de la modélisation du fonctionnement d'un plateau distributeur à cheminée selon l'art entraineur et selon un mode de réalisation de l'invention.

Sur les figures, les mêmes références désignent des éléments identiques ou analogues.

**Description de l'invention**

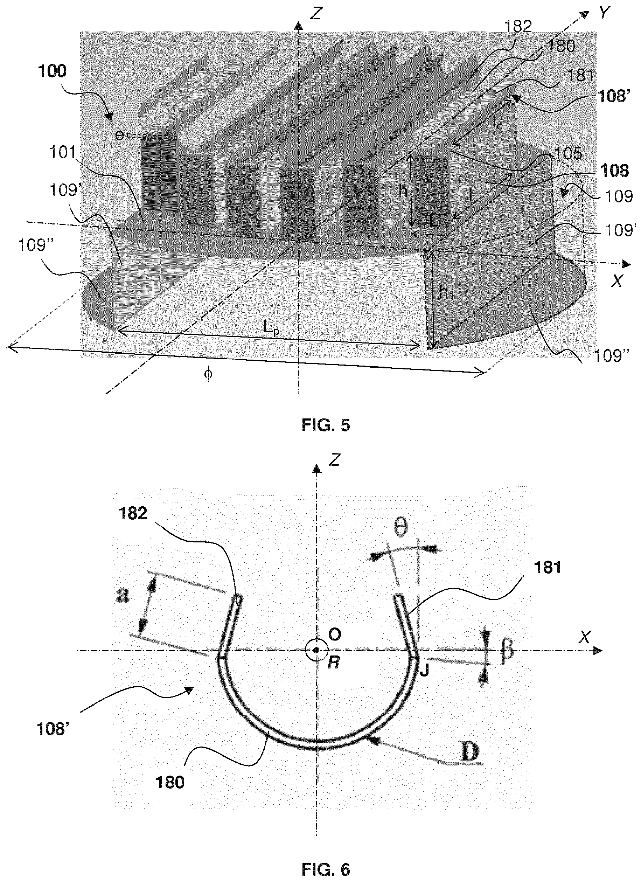

La description détaillée du plateau selon l'invention qui suit fait référence aux figures 5 et 6, la figure 5, illustrant un mode de réalisation non limitatif du plateau.

Le plateau 100 est représenté selon une vue perspective à la figure 5, dans sa position d'utilisation au sein d'une colonne de contact gaz/liquide. Classiquement, le plateau 100 s'inscrit dans un cylindre de diamètre $\phi$, qui est sensiblement égal à celui de la colonne de contact gaz/liquide. Le plateau selon l'invention est bien adapté à être utilisé dans des colonnes de diamètre important, typiquement supérieur ou égal à 1 mètre, et de préférence supérieur ou égal à 3 m, et pouvant par exemple atteindre 7 à 8 m.

Le plateau 100 pour colonne d'échange de chaleur et/ou de matière entre un gaz et un liquide, comporte une pluralité de cheminées 108 en saillies sur une portion 101 de la face supérieure du plateau pour le passage exclusif du gaz à travers le plateau 101.

On appelle face supérieure du plateau 100 la face du plateau qui est orientée vers le haut de la colonne d'échange. Par opposition, la face inférieure du plateau est celle orientée vers le bas de la colonne par lequel le gaz arrive.

Le plateau 100 peut comprendre des moyens pour le passage du liquide à travers le plateau (non représenté) et/ou une zone de collecte du liquide 109.

Par pluralité de cheminées, on entend au moins deux cheminées. Le nombre de cheminées est variable et dépend de la conception du plateau, en particulier de paramètres tels que la taille du plateau, le taux d'ouverture au gaz souhaité, le volume de la zone de collecte, etc.. A titre indicatif seulement, sans limitation aucune, le plateau peut comporter entre 2 et 100 cheminées 108, par exemple de 3 à 32 cheminées.

Les cheminées 108 sont traversées par un axe Z, dans le sens de leur hauteur, qui est confondu avec la verticale lorsque le plateau est en position d'utilisation dans la colonne. Les cheminées 108 ont sensiblement une forme de parallélépipède, de préférence rectangle, sont allongées selon un axe longitudinal Y orthogonal à l'axe Z, et sont disposées parallèlement entre elles. Chaque cheminée 108 est formée de plusieurs parois qui délimitent un volume interne ouvert de part et d'autre du plateau 100. Elles comportent ainsi une ouverture d'échappement du gaz 105 à leur sommet. Elles comportent à leur base une ouverture d'arrivée pour le gaz provenant de la partie inférieure du plateau distributeur 100.

De préférence un espacement régulier sépare les cheminées 108. La forme de parallélépipède, de préférence rectangle, permet une large ouverture au passage du gaz, notamment en comparaison de cheminées cylindriques connues, telles que celles illustrées à la figure 2, ce qui permet de limiter les pertes de charge.

Longueur I et largeur L de la cheminée 108 sont définies dans le plan (XY) formé par la portion 101 du plateau supportant les cheminées 108, qui est le plan horizontal lorsque le plateau est en position d'utilisation dans une colonne. Par souci de simplification, on peut se référer dans la suite de la description à un plan/axe horizontal, ou encore à «l'horizontale », pour désigner tout plan/axe contenu dans le plan formé par la portion du plateau support des cheminées. La hauteur h de la cheminée est définie dans un plan orthogonal à celui formé la portion du plateau supportant les cheminées, c'est-à-dire un plan vertical lorsque le plateau est en position d'utilisation dans une colonne. La cheminée est traversée par l'axe Z comme décrit précédemment, qui est donc un axe orthogonal au plan (XY) formé par la portion 101 supportant les cheminées 108. Le gaz traverse la cheminée 108 dans le sens de sa hauteur, selon cet axe Z. Par souci de simplification, on peut se référer dans la suite de la description à un plan/axe vertical, ou encore «la verticale », pour désigner tout plan/axe contenu dans un plan orthogonal au plan formé par la portion du plateau support des cheminées.

A titre d'exemple non limitatif, la hauteur des cheminées peut être comprise entre 0,15 m et 1,00 m, et de préférence entre 0,2 m et 0,6 m.

Au moins une cheminée 108 est surmontée par un chapeau 108' pour empêcher le passage du liquide au travers de la cheminée, le chapeau 108' étant surélevé par rapport à l'ouverture d'échappement du gaz de manière à laisser un espace e pour le passage du gaz, et le chapeau 108' comportant un profil aérodynamique. Le chapeau comprend ainsi un corps inférieur 180 sensiblement semi-cylindrique allongé selon l'axe Y et ouvert du côté opposé à l'ouverture d'échappement 105 de la cheminée, prolongé latéralement par deux ailettes planes (181, 182) inclinées vers l'axe de révolution R du corps inférieur 180 d'un angle θ compris entre 0 et 30° par rapport à l'axe Z. De préférence, l'angle θ d'inclinaison des ailettes est compris entre 5° et 20°, et est par exemple est égal à 15°. Il est entendu que le corps inférieur 180, étant ouvert du côté opposé à l'ouverture d'échappement 105 de la cheminée 108, c'est-à-dire vers le sommet de la colonne lorsque le plateau est en position d'utilisation, est une portion de cylindre creux ; il n'y a pas de matière dans cette partie inférieure sensiblement semi-cylindrique du chapeau.

Le diamètre D du corps inférieur 180 du chapeau 108' est de préférence au moins égal à la largeur L de la cheminée 108.

La longueur $l_c$ du corps inférieur 180 du chapeau 108' est de préférence au moins égale à la longueur I de la cheminée 108.

Par sensiblement semi-cylindrique, on entend que le corps inférieur 180 forme un demi cylindre ou presque, c'est-à-dire qu'il comporte une section en arc de cercle de longueur inférieure ou égale à celle d'un demi-cercle, ayant un axe de symétrie confondu avec l'axe Z, et définissant un angle β formé entre le centre O du cercle, l'axe X et la jonction J entre une ailette et le corps inférieur compris entre 0 et 30°. Cet angle β est par exemple égal à 0. L'aérodynamisme du profil du chapeau augmente avec la valeur de l'angle β. La figure 6 illustre en détail le profil du chapeau 108 d'un plateau selon l'invention, où sont représentés les angles θ et β, et les dimensions caractéristiques des deux parties (180 et 181/182) du chapeau.

Dit d'une autre manière, la section en arc de cercle a un axe de symétrie confondu avec l'axe Z, et l'angle du secteur angulaire définissant l'arc de cercle formé par la section du corps inférieur est compris entre (180 - 2x3) et 180°, soit entre 120° et 180°.

Par élément surélevé, on entend que la base dudit élément est à un niveau (cote) plus élevé par rapport à une surface de référence. Ainsi, un chapeau surélevé 108' par rapport à l'ouverture d'échappement du gaz 105 de la cheminée signifie que la base du chapeau se trouve à une cote plus élevée que l'ouverture d'échappement du gaz de la cheminée, en l'occurrence à une hauteur e de l'ouverture 105.

A titre d'exemple non limitatif, l'espace entre le chapeau et l'ouverture d'échappement du gaz de la cheminée peut être compris entre 0,005 m et 0,20 m, et de préférence entre 0,03 m et 0,10 m. A titre d'exemple non limitatif, le rapport e/L, c'est-à-dire le rapport entre l'espace e laissé entre le chapeau et l'ouverture d'échappement du gaz de la cheminée et la largeur L de la cheminée est de préférence compris entre 1/16 et 8/5, et de préférence entre 1/4 et 1,25, afin de respecter un facteur d'énergie cinétique ($\rho.v^2$ avec ρ la densité et v la vitesse) donné en vue d'éviter tout engorgement du garnissage situé au-dessus du plateau.

Les deux ailettes (181, 182) sont allongées selon l'axe longitudinal Y de la cheminée 108, qui est parallèle à l'axe de révolution R du corps inférieur 180. La longueur de l'ailette $l_a$ (référence non représentée) est définie comme la dimension la plus grande dans le plan formé par l'ailette. La largeur de l'ailette a est la dimension la plus petite définie dans le plan formé par l'ailette. La largeur de l'ailette a est de préférence comprise entre 10 mm et une valeur maximale $a_{max}$ égale à $a=(D*\cos(\beta))/(2*\sin(\theta))$. De préférence la valeur maximale $a_{max}$ correspond à une configuration où les deux ailettes se rejoignent sur l'axe Z.

De préférence, les ailettes (181, 182) ont la forme d'un rectangle.

Avantageusement, la longueur $l_a$ des ailettes (181, 182) est égale à la longueur $l_c$ du corps inférieur 180 du chapeau 108'.

Selon un mode de réalisation, tel qu'illustré à la figure 5, toutes les cheminées 108 sont munies du chapeau au profil aérodynamique tel que décrit. Cette configuration permet une meilleure homogénéisation de la distribution du gaz.

Selon un autre mode de réalisation, le plateau comporte des cheminées munies du chapeau au profil aérodynamique tel que précédemment décrit, ainsi que des cheminées munies de chapeaux classiques, par exemple des chapeaux plats, ou en forme de chapeaux chinois, ou semi-cylindriques. De préférence, selon ce mode de réalisation, les cheminées munies de chapeaux classiques sont positionnées en périphérie du plateau.

Grâce notamment au profil aérodynamique tel que décrit des chapeaux des cheminée, le plateau selon l'invention présente une bonne qualité de distribution du gaz, meilleure par exemple que dans le cas d'un plateau à cheminées de gaz à chapeaux plats, ou semi-cylindriques, tout en permettant de limiter la perte de charge dans la colonne liée à l'utilisation de plateaux.

La qualité de distribution du gaz peut être quantifiée par différents moyens, par exemple par la détermination d'un indice spécifique IQ, définit de la manière suivante.

$$IQ = 1 - \frac{\sum_{i=1}^{n}(|u_i - \overline{U}|)A_i}{2|\overline{U}|\sum_{i=1}^{n}A_i} \quad \text{(I)}$$

$$\overline{U} = \frac{\sum_{i=1}^{n}u_iA_i}{\sum_{i=1}^{n}A_i} \quad \text{(II)}$$

ui: la vitesse locale sur la facette i

Ai : la surface de la facette de la maille de calcul

La perte de charge qui est une perte de pression entre deux niveaux de la colonne, peut-être par exemple mesurée par le biais de manomètres, ou estimée par CFD (Computational Fluid Dynamics) lors de simulations.

Les chapeaux 108 peuvent être fixés au-dessus des cheminées par tout moyen connu de l'homme du métier, par exemple au moyen de pattes de fixation fixées sur la cheminée et le chapeau.

Le plateau illustré à la figure 5 est un plateau distributeur de gaz 100 adapté pour être mis en oeuvre au fond d'une colonne d'échange de chaleur et/ou de matière entre un gaz et un liquide fonctionnant selon un écoulement à contre-courant, le gaz montant depuis le fond de la colonne à travers les cheminées 108 du plateau distributeur de gaz pour le passage exclusif du gaz, et le liquide descendant étant collecté dans une zone de collecte du liquide 109, pouvant alors être ensuite évacué hors de ladite colonne. Un tel plateau ne comporte pas de moyens de distribution de liquide, permettant de distribuer le liquide vers un contacteur gaz/liquide qui serait placé en amont (sous le plateau).

Le plateau distributeur de gaz 100 comporte ainsi une zone de collecte du liquide 109 comportant deux déversoirs diamétralement opposés 109' pour la collecte du liquide sur le plateau 100.

Par déversoir, on entend une portion du plateau qui est inclinée, typiquement sensiblement orthogonale, par rapport à la portion 101 de la face supérieure du plateau 100 supportant les cheminées 108, qui est positionnée en périphérie du plateau et qui permet au liquide de se déverser vers la base 109" du plateau 100 située à une cote moins élevée que celle de la portion 101 de la face supérieure du plateau 100. Les cotes sont évaluées lorsque le plateau 100 est en position non inclinée (i.e. portion 101 du plateau supportant les cheminées dans un plan sensiblement horizontal XY) et disposé de manière à ce l'axe Z traversant les cheminées 108 soit vertical, correspondant à la position d'utilisation du plateau dans la colonne d'échange gaz/liquide. Cela est transposable à toutes les cotes mentionnées dans la présente description.

Les déversoirs 109' sont de préférence situés à la périphérie du plateau distributeur de gaz dans deux zones diamétralement opposées, et sont orthogonaux à la portion 101 supportant les cheminées 108. Ce sont par exemple des plaques planes reliant la portion 101 support des cheminées 108 et la base 109" du plateau distributeur 100, orthogonales aux plans formés par la portion 101 et la base 109" du plateau 100.

La zone de collecte 109 est équivalente à un volume pouvant être calculé à partir du diamètre $\phi$ du cylindre dans lequel s'inscrit le plateau 100, de la hauteur $h_1$ de la zone de collecte définie entre la base 109" du plateau et la portion 101 support des cheminées, et de la largeur $L_p$ de la portion 101 du plateau.

La zone de collecte 109 comporte de préférence deux volumes distincts, chaque volume étant en partie délimité par l'un des deux déversoirs et une portion basale 109" du plateau. Les limites d'un tel volume de la zone de collecte 109 sont représentées en pointillés dans la figure 5. Lorsque le plateau est positionné dans la colonne de contact gaz/liquide, chacun des deux volumes est alors également délimité par la paroi interne de la colonne à laquelle le plateau est fixé. Les deux volumes sont ouverts vers le haut du plateau, c'est-à-dire du côté des cheminées 108, de manière à recueillir le liquide, et sont fermés vers le bas du plateau, c'est-à-dire au niveau de la base 109" du plateau. Des moyens d'évacuation du liquide collecté, tels que des ouvertures dans le plateau et des conduits, non représentés, peuvent être prévus dans la zone de collecte 109, en particulier dans les deux volumes de la zone de collecte. Ainsi, le liquide peut être évacué depuis la zone de collecte vers le fond de la colonne dans une zone de la colonne où se forme une garde liquide et d'où il peut ensuite être extrait hors de la colonne.

Selon le mode de réalisation illustré à la figure 5 les déversoirs 109' sont situés en périphérie du plateau 100, par exemple à deux extrémités opposées du plateau. Cependant, dans un plateau selon l'invention adapté à être placé en fond de colonne pour la distribution du gaz, sans fonction de redistribution du liquide, les déversoirs peuvent être situés sur des sections centrales pour les plateaux multi-passes, en fonction du diamètre de la colonne.

La présente invention ne se limite pas à un tel plateau distributeur de gaz, apte à être disposé en fond de colonne, sans fonction de distribution de liquide. En effet, le plateau selon l'invention peut comporter à la fois une fonction de distribution de gaz et une fonction de distribution de liquide. Il comporte toujours une fonction de collecte du liquide.

Dans ce cas, le plateau selon l'invention peut être placé dans une colonne comportant une pluralité de sections, chacune des sections comprenant un contacteur gaz/liquide, typiquement un lit de garnissage, par exemple un lit de garnissage structuré, et disposé entre une section supérieure et une section inférieure, les sections supérieure et inférieure étant successives dans la colonne, de manière à distribuer le gaz à la base du contacteur gaz/liquide de la section supérieure et distribuer le liquide au sommet du contacteur gaz/liquide de la section inférieure.

Les moyens de passage du liquide à travers le plateau assurant la fonction distribution de liquide peuvent comprendre, et de préférence être, un ensemble de cheminées de passage du liquide en saillies sur la face supérieure du plateau et/ou sur la face inférieure du plateau. De manière à ce que le liquide passe par les cheminées pour le passage de liquide, et non par les cheminées de passage exclusif du gaz, les cheminées pour le passage de liquide sont avantageusement moins haute par rapport aux cheminées pour le passage de gaz. Les cheminées pour le passage du liquide peuvent avoir différentes formes, et être sensiblement cylindriques, ou sensiblement parallélépipédiques, et de préférence sensiblement cylindriques.

Alternativement, les moyens de passage du liquide à travers le plateau peuvent comprendre, et de préférence être, un ensemble d'orifices disposés sur le plateau, à l'image des orifices du plateau selon l'art antérieur illustré à la figure 2.

Selon un autre exemple de réalisation de l'invention, les moyens pour le passage du liquide à travers le plateau comportent à la fois des cheminés et des orifices.

Ces moyens pour le passage du liquide sont de préférence disposés entre les cheminées pour le passage exclusif du gaz. Le nombre de moyens pour le passage du liquide est avantageusement supérieur au nombre de cheminées pour le passage exclusif du gaz. Le pas des moyens pour le passage du liquide peut être triangulaire ou carré. Afin de réaliser une bonne distribution du liquide et une bonne répartition du liquide sur le contacteur gaz/liquide, les moyens pour le passage du liquide sont uniformément répartis sur le plateau, c'est-à-dire situés sur la totalité de la surface du plateau, entre les cheminées pour le passage du gaz.

Avantageusement, l'intérieur d'au moins une des cheminées 108 est pourvu d'un élément dispersif par rapport au gaz, c'est-à-dire un élément qui assure une dispersion du gaz lors de son passage dans la cheminée, générant ainsi une meilleure répartition (au sens de l'homogénéisation) du gaz dans la cheminée, et donc à la sortie de la cheminée.

De préférence, toutes les cheminées du plateau distributeur sont pourvues d'un tel élément dispersif, de manière à favoriser une homogénéisation du flux de gaz en aval du plateau distributeur.

Cet élément dispersif est de préférence positionné à la base de la cheminée, par exemple dans le premier tiers de la cheminée. En étant ainsi plus proche de la base de la cheminée que de son sommet, l'élément dispersif permet de redistribuer le gaz sur la totalité de surface de la cheminée tout en laissant une hauteur suffisante pour la stabilisation gaz ayant traversé la cheminée.

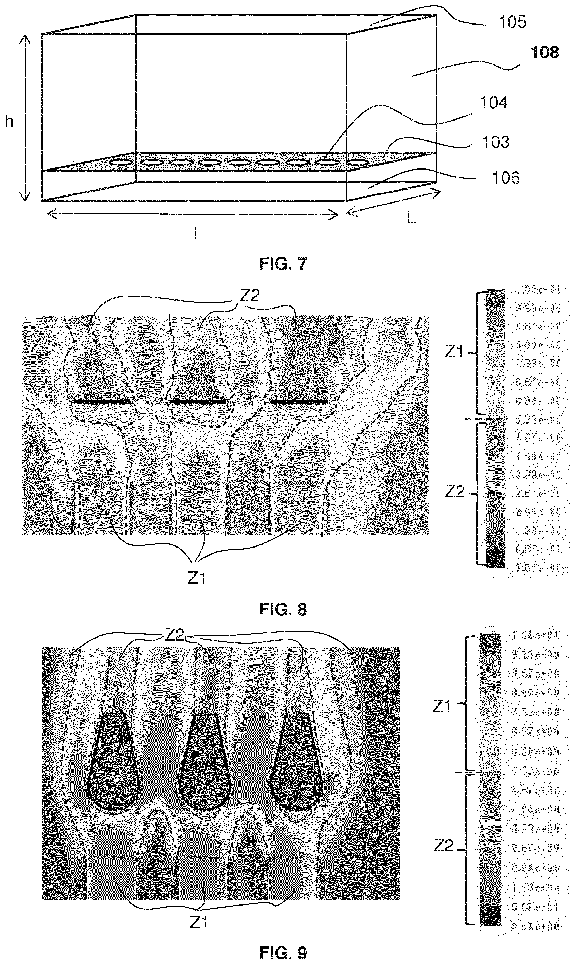

Un exemple d'un tel mode de réalisation est illustré à la figure 7. L'élément dispersif comprend avantageusement une plaque perforée 103 comportant des orifices circulaires 104. La plaque peut alternativement comprendre des orifices ou des fentes pour le passage du gaz. La plaque 103 est de préférence positionnée plus proche de l'ouverture d'arrivée du gaz 106 que de l'ouverture d'échappement du gaz 105 de la cheminée 108.

L'élément dispersif peut également être un garnissage vrac ou de type structuré, préférentiellement de type structuré notamment car un garnissage structuré permet une densité uniforme du milieu dispersif. Il peut aussi être une combinaison d'un ou plusieurs de ces éléments.

On appelle garnissage vrac, des empilements anarchiques, aléatoires, d'éléments unitaires possédant des formes particulières, par exemple des anneaux, des spirales, etc. Ils sont généralement utilisés pour effectuer des échanges de chaleur et/ou de matière, qui se réalisent au sein de ces éléments unitaires. Ces éléments unitaires peuvent être en métal, en céramique, en plastique ou en matériaux analogues. Les demandes de brevet EP 1478457 et WO 2008/067031 décrivent deux exemples d'élément unitaire de garnissage vrac. Le garnissage vrac offre des qualités intéressantes en termes d'efficacité de transfert, faible perte de charge et simplicité d'installation. L'aire géométrique du garnissage vrac peut être comprise entre 70 et 250 $m^2/m^3$. On appelle garnissage structuré, un empilement de plaques ou de feuilles pliées, ondulées (« corrugated » en anglais, c'est-à-dire sensiblement ondulé avec des angles droits), et arrangées de manière organisée sous forme de grand blocs comme décrit notamment dans les demandes de brevet FR 2913353 (US 2010/0213625), US 3,679,537 et US 4,296,050. Ils sont généralement utilisés pour réaliser des échanges de chaleur et/ou de matière qui s'effectuent sur ces plaques. Les garnissages structurés ont l'avantage d'offrir une grande aire géométrique pour un diamètre représentatif donné. L'aire géométrique du garnissage structuré peut être comprise entre 100 et 500 $m^2/m^3$.

Lorsqu'il s'agit d'un garnissage vrac ou de type structuré, l'élément dispersif peut être réparti à l'intérieur de de la ou des cheminées pour le passage exclusif du gaz de manière uniforme dans le sens de la hauteur de la cheminée (selon l'axe Z) et de manière uniforme selon un plan orthogonal à la hauteur de la cheminée (selon un plan XY). De cette manière, la dispersion du gaz traversant la ou les cheminées est la plus homogène possible, ce qui permet un flux de gaz en sortie de la ou des cheminées constant sur une section correspondant à la section de la ou des cheminées.

Toujours lorsqu'il s'agit d'un garnissage vrac ou de type structuré, l'élément dispersif peut être uniformément réparti dans la cheminée sur une épaisseur au moins égale à 5 cm dans le sens de la hauteur de la cheminée. De cette manière, les particules de gaz traversant de telles épaisseurs de matériau dispersif sont suffisamment dispersées pour assurer un flux de gaz homogène en sortie des cheminées. Il peut également être uniformément réparti sur toute la hauteur de la ou des cheminées pour le passage exclusif du gaz.

Encore lorsqu'il s'agit d'un garnissage vrac ou de type structuré, l'élément dispersif est de préférence plus capacitif que le garnissage utilisé en tant que contacteur gaz/liquide dans la colonne d'échange de matière et/ou de chaleur entre un gaz et un liquide, et positionné sous forme de lit occupant tout le diamètre de la colonne.

L'invention concerne également une colonne d'échange de matière et/ou de chaleur entre un gaz et un liquide, dans laquelle les deux fluides sont mis en contact au moyen d'au moins un contacteur gaz/liquide. Un tel contacteur gaz/liquide est de préférence un lit de garnissage structuré ou vrac, tels que définis précédemment. Ce peut être également tout autre moyen de mise en contact gaz/liquide permettant un échange de matière et/ou de chaleur, tel que des plateaux.

La colonne selon l'invention peut être une colonne telle que décrite en relation avec la figure 1, par exemple adaptée à un procédé d'absorption de composés acides tels que le $CO_2$, l'$H_2S$, le COS, le disulfure de carbone ($CS_2$), le dioxyde de soufre ($SO_2$) et les mercaptans (RSH) tel que le méthylmercaptan ($CH_3SH$), l'éthylmercaptan ($CH_3CH_2SH$) et le propylmercaptan ($CH_3CH_2CH_2SH$), contenus dans un gaz à traiter, par le liquide qui est une solution aqueuse d'amine(s). La colonne peut ainsi comporter, sans reprendre exhaustivement la description qui a déjà été faite plus haut d'une telle colonne, au moins une entrée d'un liquide (appelé « solvant pauvre ») disposée au sommet de la colonne, au moins une entrée d'un gaz à traiter au fond de la colonne, au moins une sortie pour le gaz traité au sommet de la colonne, et au moins une sortie du liquide enrichi en contaminants contenus initialement dans le gaz à traiter en fond de colonne (appelé « solvant riche »). La colonne comporte avantageusement au moins un contacteur gaz/liquide 7, de préférence un lit de garnissage structuré, pour mettre en contact le gaz à traiter avec le solvant pauvre.

La colonne selon l'invention comporte en outre au moins un plateau distributeur tel que décrit ci-dessus, pour distribuer le gaz de manière homogène sur le contacteur gaz/liquide (7), et éventuellement le liquide, tout en limitant la perte de charge.

Selon un mode de réalisation, la colonne comporte un plateau distributeur tel que décrit ci-dessus, et notamment un plateau distributeur de gaz et collecteur de liquide comportant une zone de collecte de liquide 109 avec déversoirs diamétralement opposés 109', sans fonction de redistribution de liquide, comme illustré à la figure 5, disposé au fond de la colonne, en amont de tout contacteur gaz/liquide, pour distribuer le gaz à la base dudit contacteur gaz/liquide, de manière homogène. Le plateau distributeur de fond de colonne peut être précédé par un dispositif de pré-distribution de la phase gaz (placé en amont du plateau selon l'invention).

La colonne peut comporter plusieurs sections, chaque section comprenant un contacteur gaz/liquide, de préférence un lit de garnissage structuré ou vrac, et plus préférentiellement un lit de garnissage structuré.

Selon un mode de réalisation, la colonne est ainsi configurée, et un plateau selon l'invention est disposé entre deux sections successives dans la colonne, une section supérieure et une section inférieure, pour distribuer le gaz à la base dudit contacteur gaz/liquide 7 de la section supérieure et distribuer le liquide au sommet du contacteur gaz/liquide 7 de la section inférieure. Un tel plateau selon l'invention comporte avantageusement des moyens de distribution de liquide, ou est alternativement associé à un dispositif séparé de distribution de liquide positionné en amont (dans le sens de l'écoulement de gaz) qui permet de distribuer le liquide collecté par le plateau selon l'invention.

La colonne selon l'invention peut être utilisée dans un procédé de traitement de gaz, en particulier un procédé d'élimination de composés acides contenus dans un gaz au moyen d'une solution liquide à base d'amine(s), par exemple pour traiter du gaz naturel, ou dans un procédé pour le captage du $CO_2$ qui est typiquement un procédé de traitement du gaz au moyen d'une solution liquide à base d'amine(s), par exemple pour traiter des fumées de combustion. La colonne selon l'invention peut également être avantageusement utilisée dans un procédé de déshydratation d'un gaz visant à éliminer l'eau (« sécher ») contenue dans un effluent gazeux, tel que le gaz naturel, par une mise en contact du gaz avec solvant liquide, tel que le glycol, ou encore être utilisée dans un procédé de distillation de liquide. D'autres types de solvants peuvent être utilisés dans ces procédés où une colonne selon l'invention peut être utilisée.

**Exemple**

L'exemple suivant illustre certains avantages de la présente invention, en comparant les résultats obtenus en utilisant un plateau équipé de cheminées de passage du gaz selon l'invention, et un plateau comportant des cheminées de passage du gaz selon l'art antérieur, lors d'une simulation numérique tridimensionnelle basée sur la mécanique des fluides en gaz seul.

Dans cette simulation, seule une section du plateau distributeur, composée de trois cheminées, est simulée. La qualité de distribution est mesurée à 45 cm au-dessus du plateau distributeur.

Les deux exemples de plateaux (portions de plateaux) ont été testés avec une vitesse superficielle du gaz de 4,3 m/s. La vitesse superficielle du gaz dans la colonne est la vitesse superficielle du gaz en fût vide, entendue comme étant le rapport entre le débit volumique du gaz aux conditions passant dans la section ($m^3$/s) de la colonne et la section de la colonne ($m^2$).

L'exemple de la portion plateau selon l'invention comporte les caractéristiques suivantes :

- Diamètre du corps inférieur du chapeau : 0,072 m
- Angle θ du chapeau : 15°.
- Angle β du chapeau : 0.
- Pas d'élément dispersif dans les cheminées
- Longueur de l'ailette a : 93 mm
- Espace e : 6,4 cm
- Hauteur des cheminées :55 cm
- Nombre de cheminées :3

L'exemple de la portion plateau selon l'art antérieur comporte les caractéristiques suivantes :

- Type de chapeau : plat, de forme rectangulaire
- Pas d'élément dispersif dans les cheminées
- Espace e : 10 cm
- Hauteur des cheminées : 55 cm
- Nombre de cheminées :3

Les résultats de la simulation sont présentés dans le tableau 1 ci-dessous, ainsi qu'aux figures 8 et 9.

Tableau 1

| | Perte de Pression (mbar) | Indice IQ (%) |
|---|---|---|
| Plateau selon l'art antérieur (cf figure 8) | 1,688 mbar | 0,51 |
| Plateau selon l'invention (cf figure 9) | 0,0654 mbar | 0,72 |

Les performances des deux plateaux sont évaluées en termes de perte de pression et de qualité de distribution.

La qualité de la distribution du gaz peut être évaluée avec le calcul d'un indice IQ. Cet indice peut prendre une valeur comprise entre 0 et 1, valeurs extrêmes incluses. Une valeur proche de 1 indique une bonne qualité de distribution et à l'inverse une valeur proche de 0 matérialise une mauvaise qualité de distribution.

Cet indice est calculé de la manière suivante :

$$IQ =$$

$$IQ = 1 - \frac{\sum_{i=1}^{n}(|u_i - \bar{U}|)A_i}{2|\bar{U}|\sum_{i=1}^{n}A_i}$$

$$\bar{U} = \frac{\sum_{i=1}^{n}u_i A_i}{\sum_{i=1}^{n}A_i}$$

ui: la vitesse locale sur la facette i
Ai : la surface de la facette de la maille de calcul

D'après le tableau 1 et les figures 8 et 9, on observe que l'utilisation de plateau selon l'invention comme exemplifié permet d'améliorer significativement la qualité de distribution du gaz, comparativement au plateau de l'art antérieur exemplifié.

L'indice de qualité de distribution du plateau selon l'invention est en effet de 0,72, au lieu de 0,51 avec les éléments de distribution selon l'art antérieur.

La vitesse du gaz est imagée à la figure 8 dans le cas du plateau selon l'art antérieur, et à la figure 9 dans le cas du plateau selon l'invention. Plus précisément les contours des champs de vitesses du gaz sont donnés en niveaux de gris, l'échelle étant représentée à droite de chaque figure, donnant les vitesses du gaz en (m/s) Les zones Z1 et Z2 ont été dessinées pour une meilleure lecture des niveaux de gris associés aux différentes vitesses représentées. Ainsi dans la zone Z1 de l'image il faut se référer aux niveaux de gris de la zone Z1 de l'échelle correspondante. Il en est de même pour la zone Z2.

On peut observer dans ces figures 8 et 9 que les vitesses du gaz sont plus homogènes dans le cas du plateau selon l'invention (figure 9) que dans le cas du plateau selon l'art antérieur (figure 8).

L'invention proposée permet également de réduire les pertes de pression (perte de charge) de 61%.

**Revendications**

1. Plateau (100) pour colonne d'échange de chaleur et/ou de matière entre un gaz et un liquide comportant :

   - une face supérieure et une face inférieure,
   - une pluralité de cheminées (108) en saillies sur une portion (101) de la face supérieure dudit plateau (100) pour le passage exclusif dudit gaz à travers ledit plateau (100), lesdites cheminées comportant à leur sommet une ouverture d'échappement du gaz, étant traversées par un axe Z dans le sens de leur hauteur et allongées selon un axe longitudinal Y orthogonal à l'axe Z, et étant sensiblement parallélépipédiques et parallèles entre elles, et

   dans lequel au moins une desdites cheminées (108) est surmontée par un chapeau au profil aérodynamique (108') pour empêcher le passage du liquide au travers de ladite cheminée (108), ledit chapeau (108') étant surélevé par rapport à l'ouverture d'échappement du gaz de la cheminée (108), ledit chapeau (108') comportant un corps inférieur (180) sensiblement semi-cylindrique allongé selon l'axe longitudinal Y et ouvert du côté opposé à l'ouverture d'échappement de la cheminée (108), prolongé latéralement par deux ailettes planes (181, 182) inclinées vers l'axe de révolution (R) du corps inférieur d'un angle $\theta$ compris entre 0 et 30° par rapport à l'axe Z, le diamètre (D) du corps inférieur (180) étant au moins égal à la largeur (L) de la cheminée (108) et la longueur ($l_c$) du corps inférieur (180) étant au moins égale à la longueur (l) de la cheminée (108).

2. Plateau selon la revendication 1, dans lequel chaque cheminée (108) est surmontée d'un chapeau au profil aérodynamique (180).

3. Plateau selon l'une quelconque des revendications précédentes, dans lequel le corps inférieur (180) comporte une section en arc de cercle de longueur inférieure ou égale à celle d'un demi-cercle, a un axe de symétrie confondu avec l'axe Z, et définit un angle $\beta$ formé entre le centre O du cercle, l'axe X et la jonction J entre une ailette et le corps inférieur compris entre 0 et 30°.

4. Plateau selon l'une quelconque des revendications précédentes, dans lequel le corps inférieur (180) est un demi-cylindre.

5. Plateau selon l'une quelconque des revendications précédentes, dans lequel le corps inférieur (180) comporte une section en arc de cercle de longueur inférieure ou égale à celle d'un demi-cercle et a un axe de symétrie confondu avec l'axe Z, et la largeur (a) de l'ailette (181, 182) est comprise entre 10 mm et une valeur maximale $a_{max}$ égale à $a_{max} = (D*\cos(\beta))/(2*\sin(\theta))$, avec $\beta$ l'angle formé entre le centre O du cercle, l'axe X et la jonction J entre l'ailette (181, 182) et le corps inférieur (180), $\theta$ l'inclinaison des ailettes (181, 182) par rapport à l'axe Z, et D le diamètre du corps inférieur (180).

6. Plateau selon l'une quelconque des revendications précédentes, dans lequel lesdites ailettes (181, 182) ont sensiblement la forme d'un rectangle.

7. Plateau selon l'une quelconque des revendications précédentes, dans lequel lesdites cheminées (108) ont sensiblement une forme de parallélépipède rectangle.

8. Plateau selon l'une quelconque des revendications précédentes, dans lequel au moins une desdites cheminées (108), et de préférence la totalité desdites cheminées (108), comporte un élément dispersif par rapport au gaz disposé à l'intérieur de ladite cheminée (108), ledit élément dispersif comprenant de préférence une plaque perforée (103) comportant des orifices circulaires (104) ou des fentes pour le passage du gaz.

9. Plateau selon l'une quelconque des revendications précédentes, comportant en outre des moyens pour le passage du liquide à travers le plateau et/ou une zone de collecte du liquide (109).

10. Plateau selon la revendication 9, pour la distribution du gaz en fond d'une colonne d'échange de chaleur et/ou de matière entre un gaz et un liquide, dans lequel la zone de collecte (109) comprend deux déversoirs diamétralement opposés (109') et orthogonaux à ladite portion (101) de la face supérieure du plateau (100) supportant les cheminées (108), lesdites cheminées (108) s'étendant parallèlement aux déversoirs (109').

11. Plateau selon la revendication 9, pour la distribution du gaz et du liquide dans une colonne d'échange de chaleur et/ou de matière entre un gaz et un liquide, dans lequel les moyens pour le passage du liquide à travers le plateau (100) comprennent une pluralité d'orifices et/ou de cheminées pour le passage du liquide.

12. Colonne d'échange de chaleur et/ou de matière entre un gaz et un liquide, comportant au moins un contacteur gaz/liquide (7) mettant en contact le gaz (g) et le liquide (l), et au moins un plateau (100) selon l'une des revendications précédentes pour distribuer le gaz, et éventuellement le liquide, sur ledit contacteur gaz/liquide (7).

13. Colonne selon la revendication 12, dans laquelle ledit plateau est selon l'une des revendications 1 à 10, et est disposé au fond de la colonne en amont de tout contacteur gaz/liquide (7) pour distribuer le gaz à la base dudit contacteur gaz/liquide (7).

14. Colonne selon la revendication 12, comportant une pluralité de sections, chacune desdites sections comprenant un contacteur gaz/liquide (7), et dans laquelle un plateau selon l'une des revendications 1 à 9 ou 11 est disposé entre une section supérieure et une section inférieure, lesdites sections supérieure et inférieure étant successives dans la colonne, pour distribuer le gaz à la base dudit contacteur gaz/liquide (7) de la section supérieure et distribuer le liquide au sommet du contacteur gaz/liquide (7) de la section inférieure.

15. Utilisation d'une colonne selon l'une des revendications 12 à 14, pour un procédé de traitement de gaz, de captage du $CO_2$, de déshydratation d'un gaz, ou de distillation.

**FIG. 1**

**FIG. 2**
**ART ANTERIEUR**

**FIG. 3**
**ART ANTERIEUR**

**FIG. 4**
**ART ANTERIEUR**

**FIG. 5**

**FIG. 6**

**FIG. 7**

**FIG. 8**

**FIG. 9**

**Europäisches Patentamt**
**European Patent Office**
**Office européen des brevets**

# RAPPORT DE RECHERCHE EUROPEENNE

**Numéro de la demande**

EP 18 20 9427

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 4 744 929 A (ROBINSON KENNETH [GB] ET AL) 17 mai 1988 (1988-05-17) <br> * colonne 5, ligne 67 - colonne 6, ligne 7; figures 10,12,13 * <br> ----- | 1-15 | INV. <br> B01D3/16 <br> B01D3/20 <br> B01D3/32 |
| A | EP 2 826 532 A1 (SULZER CHEMTECH AG [CH]) 21 janvier 2015 (2015-01-21) <br> * figures 9-10 * <br> ----- | 1-15 | |
| A | WO 2011/009048 A1 (ACS IND INC [US]; PATEL KANTILAL P [US]) 20 janvier 2011 (2011-01-20) <br> * figures 6-7 * <br> ----- | 1-15 | |

**DOMAINES TECHNIQUES RECHERCHES (IPC)**

B01D

Le présent rapport a été établi pour toutes les revendications

| Lieu de la recherche | Date d'achèvement de la recherche | Examinateur |
|---|---|---|
| La Haye | 1 mars 2019 | Thibault, Valerie |

**ANNEXE AU RAPPORT DE RECHERCHE EUROPEENNE
RELATIF A LA DEMANDE DE BREVET EUROPEEN NO.**

EP 18 20 9427

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-03-2019

| Document brevet cité au rapport de recherche | | Date de publication | Membre(s) de la famille de brevet(s) | | Date de publication |
|---|---|---|---|---|---|
| US 4744929 | A | 17-05-1988 | AUCUN | | |
| EP 2826532 | A1 | 21-01-2015 | BR | 112015031697 A2 | 25-07-2017 |
| | | | CN | 105555377 A | 04-05-2016 |
| | | | EP | 2826532 A1 | 21-01-2015 |
| | | | EP | 2996785 A1 | 23-03-2016 |
| | | | ES | 2699255 T3 | 08-02-2019 |
| | | | JP | 6336062 B2 | 06-06-2018 |
| | | | JP | 2016523709 A | 12-08-2016 |
| | | | KR | 20160032011 A | 23-03-2016 |
| | | | RU | 2015155528 A | 21-08-2017 |
| | | | US | 2016151722 A1 | 02-06-2016 |
| | | | WO | 2015007397 A1 | 22-01-2015 |
| WO 2011009048 | A1 | 20-01-2011 | US | 2012111762 A1 | 10-05-2012 |
| | | | WO | 2011009048 A1 | 20-01-2011 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2653204 A
- US 4744929 A
- EP 1478457 A
- WO 2008067031 A
- FR 2913353
- US 20100213625 A
- US 3679537 A
- US 4296050 A